# EUROPÄISCHE PATENTSCHRIFT

(11) **EP 1 800 081 B1**
(45) Veröffentlichungstag und Bekanntmachung des Hinweises auf die Patenterteilung: **13.04.2016**
(21) Anmeldenummer: 05797105.3
(22) Anmeldetag: 30.09.2005
(51) Int. Cl.: F28F 13/18

(54) **WÄRMEÜBERTRAGER UND VERFAHREN ZUR KÜHLUNG VON LADELUFT**
HEAT EXCHANGER AND CHARGE AIR COOLING METHOD
ÉCHANGEUR DE CHALEUR ET PROCÉDÉ DE REFROIDISSEMENT DE L'AIR DE SURALIMENTATION

(30) Priorität: 30.09.2004 DE 102004048207
(43) Veröffentlichungstag der Anmeldung: 27.06.2007
(73) Patentinhaber: MAHLE Behr GmbH & Co. KG, 70469 Stuttgart (DE)
(72) Erfinder: BURK, Roland, 70469 Stuttgart (DE)
(74) Vertreter: Grauel, Andreas
(86) Internationale Anmeldenummer: PCT/EP2005/010586
(87) Internationale Veröffentlichungsnummer: WO 2006/034876

(56) Entgegenhaltungen:
- EP-A- 1 076 169
- EP-A- 1 205 659
- DE-A1- 2 814 593
- DE-A1- 10 120 989
- DE-A1- 10 122 329
- JP-A- S5 826 995
- JP-A- H08 319 115
- JP-A- 2002 156 360
- JP-A- 2002 316 819
- US-A- 4 321 534

## Beschreibung

Die Erfindung betrifft einen Wärmeübertrager gemäß dem Oberbegriff des Anspruches 1, sowie ein Verfahren zur Kühlung von Ladeluft gemäß dem Oberbegriff des Anspruches 11.

Zur Leistungssteigerung von Motoren werden Turbolader zur Verdichtung der Luft verwendet. Hierbei erfolgt jedoch eine Erwärmung der Luft, im folgenden als Ladeluft bezeichnet, infolge der Kompression im Turbolader auf Temperaturen von über 150°C. Um eine derartige Lufterwärmung zu vermindern, werden Luftkühler verwendet, die vorne im Kühlmodul angeordnet sind und zur Kühlung der Ladeluft dienen. Die Ladeluft strömt dabei durch einen Wärmeübertrager, der von Umgebungsluft durchströmt und damit gekühlt wird. Dadurch ist eine Abkühlung der Ladeluft auf eine Temperatur möglich, die etwa 20-90 K über der Temperatur der Umgebungsluft liegt. Die Kühlung der Ladeluft ermöglicht eine Leistungssteigerung des Motors.

Eine zweistufige Vorrichtung zur Kühlung von Ladeluft sowie ein Verfahren zum Betreiben einer derartigen Vorrichtung ist beispielsweise aus der DE 102 54 016 A1 bekannt, welche eine weitere Leistungssteigerung infolge der verbesserten Ladeluftkühlung ermöglicht.

Aus der DE 28 14 593 C2 ist ein Verfahren und eine Vorrichtung zum Betrieb einer aufgeladenen Brennkraftmaschine bekannt, welche ein Sammeln des im Ladeluftkühler ausfallenden Kondenswassers, Abführen desselben aus dem Ladeluftkühler, Sammeln in einem getrennt vorn Ladeluftkühler angeordneten Sammelbehälter und Zuführen des gesammelten Kondenswassers in Strömungsrichtung vor der Abgasturbine in die Abgasleitung der Brennkraftmaschine vorsieht. Hierfür ist eine Pumpe oder zumindest ein ausreichendes Druckgefälle vorgesehen, welche beziehungsweise welches das Kondenswasser vom Sammelbehälter in die Abgasleitung fordert.

Eine Vorrichtung zur Befeuchtung der Einlassluft von Brennkraftmaschinen mit Turbulader ist aus EP 1 076 169 bekannt.

Wärmeübertrager, die zur Abkühlung von Luft verwendet werden, sind zur verbesserten Ableitung von sich in demselben ansammelnden Kondenswasser mit einer hydrophilen Beschichtung versehen, da man üblicherweise flüssige Wasseranteile in der gekühlten Luft vermeiden will.

Derartige Wärmeübertrager lassen jedoch noch Wünsche offen.

Es ist Aufgabe der Erfindung, einen Wärmeübertrager der eingangs genannten Art zu verbessern.

Diese Aufgabe wird gelöst durch einen Wärmeübertrager mit den Merkmalen des Anspruchs 1 sowie durch ein Verfahren mit den Merkmalen des Anspruches 11. Vorteilhafte Ausgestaltungen sind Gegenstand der Unteransprüche.

Erfindungsgemäß ist ein Wärmeübertrager zur Kühlung von Ladeluft, welcher Wasser, insbesondere Kondenswasser, in Tröpfchen- und/oder Nebelform zuführbar ist, vorgesehen, wobei der Wärmeübertrager zumindest in einem Teilbereich eine hydrophobe Oberfläche aufweist und wobei der Wärmeübertrager zumindest in einem Teilbereich der Oberfläche elektrostatisch aufladbar ist. Durch das Vorsehen einer hydrophoben Oberfläche im Gegensatz zu dem bekannten Vorsehen einer hydrophilen Oberfläche, welche das Kondenswasser in Folge der Schwerkraft gut nach unten ableitet, sammelt sich das Kondenswasser an der hydrophoben Oberfläche in Tropfenform, wobei die Tropfen in den Strömungskanal ragen, so leicht mitgenommen und letztendlich abgerissen und in Tröpfchen- und/oder Nebelform im Ladeluftstrom mitgeführt werden. Für das Versetzen der Ladeluft mit Kondenswasser ist hierbei - im Gegensatz zum Stand der Technik - keine spezielle Vorrichtung erforderlich, um das Kondenswasser in Form von Tropfen oder Nebel dem Ladeluftstrom zuzuführen. Das wieder der Ladeluft zugeführte Kondenswasser kühlt die Ladeluft und trägt somit zu einer Leistungssteigerung des Motors bei.

Im Gegensatz zur herkömmlichen Ableitung des auskondensierten Wassers erfolgt erfindungsgemäß eine gezielte Wasserbeimischung, so dass die Kühlleistung erhöht werden kann, wohingegen diese herkömmlic her Weise verloren geht. Im Falle einer herkömmlichen Abkühlung von Ladeluft mittels einer zweiten Kühlstufe, deren Kühlleistung zum Beispiel von einem Kältekreislauf erbracht wird, ist somit eine erhebliche Verschlechterung der Effizienz des Kühlsystems verbunden. Andererseits ist es aber unerwünscht, das auskondensierte Wasser dem Kraftfahrzeugmotor Unkontrolliert, das heißt örtlich und zeitlich inhomogen, zuzuführen.

Im Bereich der hydrophoben Oberfläche ist der Kontaktwinkel eines Tropfens bevorzugt größer als 90°, vorzugsweise größer als 120° und insbesondere bevorzugt größer als 150°, so dass sich das Kondenswasser perlenartig an der Oberfläche sammelt und leicht vom Ladeluftstrom mitgenommen werden kann. Die hydrophobe Oberfläche ermöglicht eine Ausbildung von nahezu kugelförmiger Tropfen, die bereits bei einer geringen Größe vom Ladeluftstrom transportiert und mitgenommen werden.

Am Wärmeübertrager sind vorzugsweise Abrisskanten vorgesehen, an welchen sich die Tropfen, die sich an der hydrophoben Oberfläche gesammelt haben, vom Wärmeübertrager infolge der herrschenden Ladeluftströmung lösen. Dabei sind die Abrisskanten bevorzugt auch mit einer hydrophoben Beschichtung versehen, so dass die geringen Adhäsionskräfte eine leichte Ablösung der Tropfen von der Oberfläche ermöglichen. Vorzugsweise sind die Abrisskanten durch Enden von Stegrippen oder Kiemen von Kiemenrippen gebildet.

Das Ablösen wird durch Strömungsgeschwindigkeiten von vorzugsweise über 3 m/s, besonders bevorzugt über 6 m/s, unterstützt, weshalb der Wärmeübertrager entsprechend strömungstechnisch ausgelegt ist. Hohe Strömungsgeschwindigkeiten unterstützen zudem, dass die Verweilzeiten an den hydrophoben Oberflächen gering sind, wodurch ein Zusammenwachsen von mehreren Tropfen verhindert werden kann, und die Tropfengröße zum Abrisszeitpunkt kleiner ist.

Zur Unterstützung der Tropfenbildung ist der Wärmeübertrager zumindest in einem Teilbereich der Oberfläche elektrostatisch aufladbar, so dass sich die sich bildenden Tropfen in Folge der elektrostatischen Aufladung gegenseitig abstoßen und sich dadurch noch leichter von der Rippenstruktur des Wärmeübertragers lösen. Zudem wird die Tendenz verringert, dass die Tropfen durch in Strömungsrichtung angeordnete Wärmeübertragersturkturen wieder eingefangen werden. Eine elektrostatische Aufladung der Tropfen verhindert auch ein Verbinden derselben im Luftstrom, so dass die Tropfen nicht zu größeren Tropfen zusammenwachsen. Dabei ist die Tendenz von nachfolgenden Rippenstrukturen wieder eingefangen zu werden, bei größeren Tropfen infolge der größeren Trägheitskräfte deutlich größer, so dass möglichst kleine Tropfen erstrebenswert sind.

Die hydrophobe Oberfläche weist vorzugsweise dispergierte, elektrisch leitende Inhaltsstoffe auf, beispielsweise in der Form von Nanopartikeln, welche einen elektrisch leitenden Kontakt zwischen den aufgeladenen hydrophoben Oberflächen und den über die hydrophobe Beschichtung rollenden Tropfen ermöglicht, so dass die elektrische Ladung diesen besser mitgegeben werden kann.

Alternativ zu den elektrisch leitenden Inhaltsstoffen kann der Wärmeübertrager mindestens einen Bereich mit neutraler oder hydrophiler, elektrisch leitender Oberfläche aufweisen, welcher eine elektrostatische Aufladung der Tropfen ermöglicht. Dabei ist der hydrophile Bereich bevorzugt deutlich kleiner ausgebildet als der hydrophobe Bereich.

Die Rippen des Wärmeübertragers weisen bevorzugt einen Abstand von maximal 2 mm, insbesondere maximal 1,5 mm, auf, können also deutlich näher beieinander liegen als die Rippen herkömmlicher Wärmeübertrager.

Eine gute Verteilung der Tropfen in der Ladeluft wird dadurch erreicht, dass die Rippen Abrisskanten in einem Abstand von maximal 5 mm aufweisen.

Eine bevorzugte Ausführungsform besteht darin, die Merkmale einer hydrophoben Oberfläche mit einer mechanischen Schwingungsanregung, vorzugsweise im nicht hörbaren Ultraschallbereich zu kombinieren.

In einer weiteren Ausführungsform wird vorgeschlagen, an den Wärmeübertrager einen Schwingungsgeber anzukoppeln, mit dem Ziel, die sich primär an der Übertragungsfläche des Wärmeübertragers bildenden Kondensattröpfchen von der Oberfläche durch mechanische Schwingungen abzulösen und gegebenenfalls in kleinere Tröpfchen zu zerteilen.

Die Schwingungsrichtung des einkoppelnden Schwingungsgebers wird vorzugsweise so gewählt, dass diese senkrecht zur Wärme übertragenden Fläche ausgerichtet ist. In weiterer Ausgestaltung des Gedankens werden mindestens zwei Schwingungsgeber an den Wärmeübertrager angekoppelt, die örtlich so verteilt sind, dass das den Wärmeübertrager durchsetzende KörperschallSchwingungsfeld möglichst homogen ist und/oder sich in Ihrer Schwingungsrichtung und Phasenlage so ergänzen, dass eine zirkulare Körperschallschwingung entsteht. Dadurch ist es möglich, alle wärmeübertragenden Flächen mit einer Schwingungskomponente senkrecht zur Oberfläche zu vibrieren.

In weiterer Ausgestaltung kann der Schwingungsgeber in seiner Frequenz und Amplitude so abgestimmt sein, dass Resonanzeffekte auftreten, die Tröpfchen einer ganz bestimmten Größe bevorzugt von der Oberfläche ablösen. Dadurch kann die Leistung des benötigten Ultraschallgebers auf kleine Werte begrenzt werden und die Ablösung kleiner Tröpfchen unterstützt werden. Weiterhin kann die Frequenz und Anordnung des oder der Schwingungsgeber in Kombination mit der Lagerung des Wärmeübertragers und/oder der Anbindung weiterer Schall leitender Komponenten hinsichtlich der Impedanzen so abgestimmt sein, dass stehende Wellen mit einer besonders förderlichen Amplitudenverteilung entstehen.

In weiterer Ausgestaltung des Gedankens, kann die Schwingunsganregung auch dazu genutzt werden, auf der Innenseite des Wärmeübertragers (also der anderen Fluidseite) den Wärmeübergangskoeffizienten zu erhöhen, oder den Druckverlust abzusenken.

Die Einkoppelung mechanischer Schwingungen in die Wärme übertragende Struktur bewirkt eine zumindest zeitweise Ablösung der an der Oberfläche gebildeten Kondensattröpfchen und ermöglicht dadurch einen schnelleren Austrag aus der Struktur durch den die Struktur durchsetzenden Gasstrom.

Im Folgenden wird die Erfindung anhand zweier Ausführungsbeispiele unter Bezugnahme auf die Zeichnung im Detail erläutert. In der Zeichnung zeigen:
- Fig. 1: eine schematische stark vergrößerte Darstellung eines mit einer erfindungsgemäßen Beschichtung versehenen Teilbereichs (Kiemenrippen) eines Wärmeübertragers gemäß dem ersten Ausführungsbeispiel, und
- Fig. 2: eine schematische stark vergrößerte Darstellung eines mit einer erfindungsgemäßen Beschichtung versehenen Teilbereichs (Stegrippen) eines Wärmeübertragers gemäß dem zweiten Ausführungsbeispiel.
- Fig. 3: eine schematische vergrößerte Darstellung eines Wärmeübertragers gemäß dem dritten Ausführungsbeispiel.

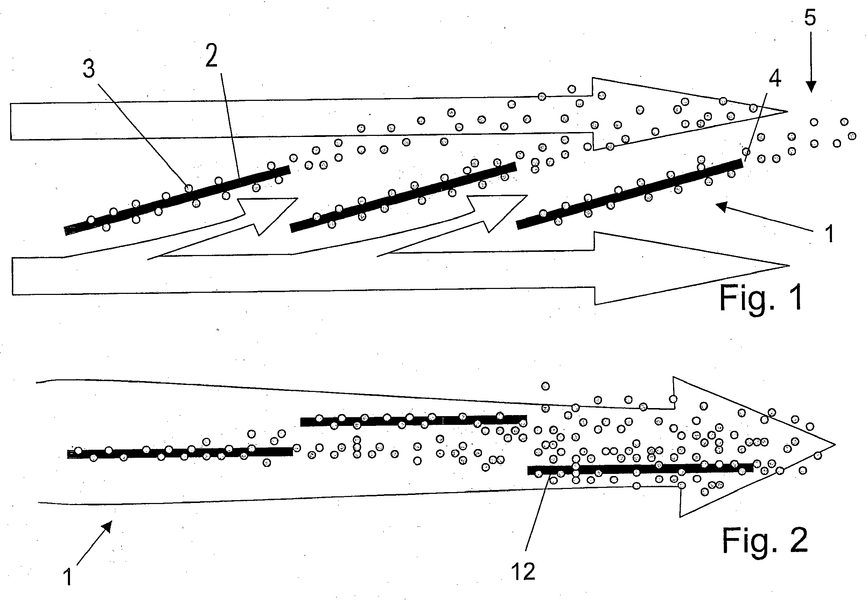

Ein Wärmeübertrager 1 zur Kühlung von Ladeluft, welche einem Kraftfahrzeugmotor zugeführt wird, weist gemäß dem ersten Ausführungsbeispiel eine im Prinzip bekannte Struktur mit schräg und parallel zueinander angeordneten Kiemenrippen 2 auf, wobei in Fig. 1 nur ein stark vereinfacht und vergrößert dargestellter Schnitt durch einen Teil der Kiemenrippen 2 dargestellt ist. Die Kiemenrippen 2 sind erfindungsgemäß mit einer hydrophoben Oberflächenbeschichtung versehen, welche bewirkt, dass das sich an den Kiemenrippen 2 sammelnde Kondenswasser, was sich aus der Ladeluft an der kühleren Oberfläche des Wärmeübertragers 1 ansammelt, in Tröpfchenform sammelt, wie durch nahezu kreisförmig dargestellte Tropfen 3 in Fig. 1 verdeutlicht ist. Dabei weisen die Tropfen 3, welche sich an der hydrophoben Oberfläche des Wärmeübertragers 1 gesammelt haben, einen Kontaktwinkel von mehr als 90° zur Oberfläche des Wärmeübertragers 1 auf, so dass sie von der Oberfläche des Wärmeübertragers 1 abperlen, vom durch Pfeile angedeuteten Ladeluftstrom entlang den Flächen der Kiemenrippen 2 mitgenommen und - nach dem Abreißen an einer Abrisskante 4 - als Kondenswasser-Nebel 5 mitgeführt werden. Hierbei strömt die Ladeluft im Bereich der Abrisskanten 4 mit einer Strömungsgeschwindigkeit von über 6 m/s, so dass ein Abreißen und Mitnehmen der Tropfen 3 gewährleistet ist.

Da das mitgerissene Kondenswasser in der Ladeluft während des Ansaugund/oder Verdichtungsvorgangs wieder verdampft, wird die Ladeluft weiter abgekühlt, so dass die Motorleistung, zum Beispiel durch Erhöhung der Einspritzmenge und deren Timing weiter gesteigert werden kann.

Gemäß dem zweiten in Fig. 2 dargestellten Ausführungsbeispiel weist der Wärmeübertrager 1 eine im Prinzip bekannte Struktur mit parallel und versetzt zueinander angeordneten Stegrippen 12 auf. Entsprechend den Kiemenrippen 2 des ersten Ausführungsbeispiels sind die Stegrippen 12 des zweiten Ausführungsbeispiels mit einer hydrophoben Beschichtung versehen, welche ein Abperlen des sich an den kühleren Stegrippen 12 sammelnden Kondenswasser gewährleist.

Die Funktion der hydrophoben Beschichtung ist die Gleiche, wie beim zuvor beschriebenen ersten Ausführungsbeispiel, so dass hierauf nicht näher eingegangen wird, jedoch ist der Strömungsverlauf der Ladeluft in Folge der Rippenform gleichmäßiger und es erfolgt keine wesentliche Umlenkung der Ladeluft durch die parallel zum Strömungsverlauf verlaufenden Stegrippen 12.

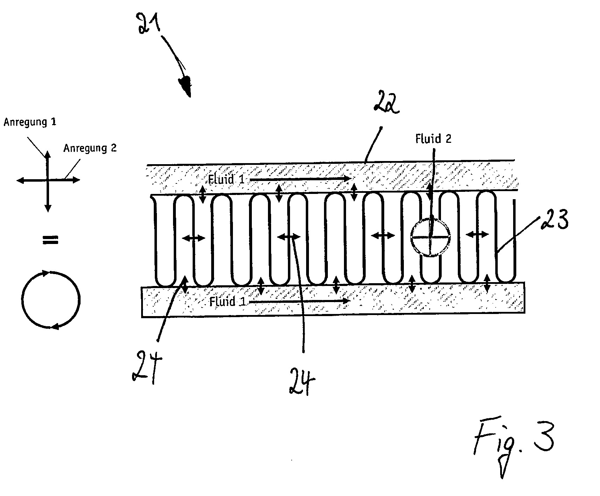

Fig. 3 zeigt ausschnittsweise einen Wärmeübertrager 21 mit von einem Fluid 1 durchströmten Strömungskanälen 22, die hier als Rohre ausgebildet sind, und mit Rippen 23, die hier als Wellrippen ausgebildet sind. Durch zwei nicht gezeigte Schwingungsgeber mit im wesentlichen senkrecht zueinander liegenden Schwingungsrichtungen (Anregung 1 beziehungsweise Anregung 2) wird eine senkrecht zur Wärme übertragenden Fläche ausgerichtete Schwingung 24 bewirkt. Das den Wärmeübertrager 21 durchsetzende Körperschall-Schwingungsfeld wird dadurch homogenisiert.

## Patentansprüche

1. Wärmeübertrager zur Kühlung von Ladeluft, welcher Wasser, insbesondere Kondenswasser, in Tröpfchen- und/oder Nebelform zuführbar ist, **dadurch gekennzeichnet, dass** der Wärmeübertrager (1) zumindest in einem Teilbereich eine hydrophobe Oberfläche aufweist, und **dass** der Wärmeübertrager (1) zumindest in einem Teilbereich der Oberfläche elektrostatisch aufladbar ist.

2. Wärmeübertrager nach Anspruch 1, **dadurch gekennzeichnet, dass** im Bereich der hydrophoben Oberfläche der Kontaktwinkel eines Tropfens (3) größer als 90°, vorzugsweise größer als 120° und insbesondere größer als 150° ist.

3. Wärmeübertrager nach Anspruch 1 oder 2, **dadurch gekennzeichnet, dass** am Wärmeübertrager(1) Abrisskanten (4) vorgesehen sind.

4. Wärmeübertrager nach Anspruch 3, **dadurch gekennzeichnet, dass** die Abrisskanten (4) durch Enden von Stegrippen (12) oder Kiemen von Kiemenrippen (2) gebildet sind.

5. Wärmeübertrager nach Anspruch 1, **dadurch gekennzeichnet, dass** die hydrophobe Oberfläche dispergierte, elektrisch leitende Inhaltsstoffe aufweist.

6. Wärmeübertrager nach einem der vorhergehenden Ansprüche, **dadurch gekennzeichnet, dass** der Wärmeübertrager (1) mindestens einen Bereich mit neutraler oder hydrophiler, elektrisch leitender Oberfläche aufweist.

7. Wärmeübertrager nach einem der vorhergehenden Ansprüche, **dadurch gekennzeichnet, dass** die Rippen des Wärmeübertragers (1) einen Abstand von maximal 2 mm, insbesondere maximal 1,5 mm, aufweisen.

8. Wärmeübertrager nach einem der vorhergehenden Ansprüche, **dadurch gekennzeichnet, dass** die Rippen Abrisskanten (4) in einem Abstand von maximal 5 mm aufweisen.

9. Wärmeübertrager nach einem der vorhergehenden Ansprüche, **dadurch gekennzeichnet, dass** der Wärmeübertrager (1) strömungstechnisch derart ausgelegt ist, dass im Bereich der Abrisskanten (4) die Strömungsgeschwindigkeit im entsprechenden Betriebszustand, der ein Beimischen von Kondenswasser erfordert, ein Wert von 3 m/s, insbesondere 6 m/s, überschritten wird.

10. Wärmeübertrager nach einem der vorhergehenden Ansprüche, **dadurch gekennzeichnet, dass** der Wärmeübertrager zumindest einen oder zwei mechanische Schwingungsgeber umfasst.

11. Verfahren zur Kühlung von Ladeluft, wobei die Ladeluft einen Wärmeübertrager (1) durchströmt, **dadurch gekennzeichnet, dass** sich an zumindest einer hydrophoben Oberfläche des Wärmeübertragers (1), welche von dem Ladeluftstrom umströmt ist, Kondenswassertropfen sammeln, welche durch den Ladeluftstrom von der hydrophoben Oberfläche abgelöst werden und in den Ladeluftstrom aufgenommen werden.

12. Verfahren nach Anspruch 11, **dadurch gekennzeichnet, dass** das im Wärmeübertrager mitgerissene Kondenswasser tröpfchenförmig oder nebelförmig in der Ladeluft weitergeführt wird.

13. Verfahren nach einem der vorhergehenden Ansprüche, **dadurch gekennzeichnet, dass** sich das Kondenswasser im Wärmeübertrager an hydrophoben Flächen in Tropfenform sammelt, wobei die sich bildenden Tropfen (3) einen Kontaktwinkel von größer als 90°, vorzugsweise größer als 120° und insbesondere größer als 150° aufweisen.

14. Verfahren nach einem der vorhergehenden Ansprüche, **dadurch gekennzeichnet, dass** zumindest in einem Betriebszustand, in welchem der Ladeluft Kondenswasser zugeführt werden soll, die Ladeluft im Wärmeübertrager (1) zumindest im Bereich von Abreißkanten (4) mit einer Strömungsgeschwindigkeit von über 3 m/s, insbesondere von über 6 m/s, strömt.

15. Verfahren nach einem der vorhergehenden Ansprüche, **dadurch gekennzeichnet, dass** im Wärmeübertrager mechanische Schwingungen angeregt werden, insbesondere durch zumindest einen an den Wärmeübertrager angekoppelten Schwingungsgeber.

16. Verfahren nach Anspruch 15, **dadurch gekennzeichnet, dass** die mechanischen Schwingungen im Wesentlichen senkrecht zu einer wärmeübertragenden Fläche des Wärmeübertragers ausgerichtet sind.

## Claims

1. A heat exchanger for cooling charge air to which water, in particular condensation water, can be added in the form of droplets and/or mist, **characterised in that** the heat exchanger (1) has a hydrophobic surface at least in a partial region, and that the heat exchanger (1) can be electrostatically charged at least in a partial region of the surface.

2. The heat exchanger as claimed in claim 1, **characterised in that**, in the region of the hydrophobic surface, the contact angle of a droplet (3) is greater than 90°, preferably greater than 120° and in particular greater than 150°.

3. The heat exchanger as claimed in claim 1 or 2, **characterised in that** separation edges (4) are provided on the heat exchanger (1).

4. The heat exchanger as claimed in claim 3, **characterised in that** the separation edges (4) are formed by ends of web fins (12) or gills of gill fins (2).

5. The heat exchanger as claimed in claim 1, **characterised in that** the hydrophobic surface has dispersing, electrically conductive constituents.

6. The heat exchanger as claimed in one of the preceding claims, **characterised in that** the heat exchanger (1) has at least one region with a neutral or hydrophilic, electrically conductive surface.

7. The heat exchanger as claimed in one of the preceding claims, **characterised in that** the fins of the heat exchanger (1) have a spacing of a maximum of 2 mm, in particular a maximum of 1.5 mm.

8. The heat exchanger as claimed in one of the preceding claims, **characterised in that** the fins have separation edges (4) with a spacing of a maximum of 5 mm.

9. The heat exchanger as claimed in one of the preceding claims, **characterised in that** the heat exchanger (1) is designed in terms of flow such that, in the operating state which requires the admixture of condensation water, the flow speed in the region of the separation edges (4) exceeds a value of 3 m/s, in particular 6 m/s.

10. The heat exchanger as claimed in one of the preceding claims, **characterised in that** the heat exchanger comprises at least one or two mechanical vibration transducers.

11. A method for cooling charge air, the charge air flowing through a heat exchanger (1), **characterised in that** droplets of condensation water accumulate on at least one hydrophobic face of the heat exchanger (1) around which the flow of charge air flows and are removed from the hydrophobic face by the flow of charge air and included in the flow of charge air.

12. The method as claimed in claim 11, **characterised in that** the condensation water which is entrained in the heat exchanger is conveyed onward in the charge air in the form of droplets or mist.

13. The method as claimed in one of the preceding claims, **characterised in that** the condensation water accumulates in the heat exchanger in the form of droplets on hydrophobic faces, with the droplets (3) which form having a contact angle of greater than 90°, preferably greater than 120° and in particular greater than 150°.

14. The method as claimed in one of the preceding claims, **characterised in that**, in at least one operating state in which condensation water is to be added to the charge air, the charge air in the heat exchanger (1) flows, at least in the region of separation edges (4), at a flow speed of over 3 m/s, in particular over 6 m/s.

15. The method as claimed in one of the preceding claims, **characterised in that** mechanical vibrations are generated in the heat exchanger, in particular by means of at least one vibration transducer which is coupled to the evaporator.

16. The method as claimed in claim 15, **characterised in that** the mechanical vibrations are aligned substantially perpendicular to a heat transmitting face of the heat exchanger.

## Revendications

1. Echangeur de chaleur pour le refroidissement d'air de suralimentation auquel peut être fournie de l'eau, en particulier de l'eau de condensation, sous forme de gouttelettes et / ou sous forme brumisée, **caractérisé en ce que** l'échangeur de chaleur (1) présente une surface hydrophobe au moins dans une zone partielle et **en ce que** l'échangeur de chaleur (1) est rechargeable électrostatiquement au moins dans une zone partielle de la surface.

2. Echangeur de chaleur selon la revendication 1, **caractérisé en ce que**, dans la zone de la surface hydrophobe, l'angle de contact d'une goutte (3) est supérieur à 90°, de préférence supérieur à 120° et en particulier supérieur à 150°.

3. Echangeur de chaleur selon la revendication 1 ou 2, **caractérisé en ce qu'**il est prévu des arêtes de décollement (4) sur l'échangeur de chaleur (1).

4. Echangeur de chaleur selon la revendication 3, **caractérisé en ce que** les arêtes de décollement (4) sont formées par des extrémités d'ailettes (12) formant des barrettes ou par des ouïes d'ailettes (2) formant des ouïes.

5. Echangeur de chaleur selon la revendication 1, **caractérisé en ce que** la surface hydrophobe présente des composants électroconducteurs dispersés.

6. Echangeur de chaleur selon l'une quelconque des revendications précédentes, **caractérisé en ce que** l'échangeur de chaleur (1) présente au moins une zone comportant une surface électroconductrice neutre ou hydrophile.

7. Echangeur de chaleur selon l'une quelconque des revendications précédentes, **caractérisé en ce que** les ailettes de l'échangeur de chaleur (1) présentent un espacement au maximum de 2 mm, en particulier au maximum de 1,5 mm.

8. Echangeur de chaleur selon l'une quelconque des revendications précédentes, **caractérisé en ce que** les ailettes présentent des arêtes de décollement (4) suivant un espacement au maximum de 5 mm.

9. Echangeur de chaleur selon l'une quelconque des revendications précédentes, **caractérisé en ce que** l'échangeur de chaleur (1) est conçu, du point de vue de la technique des fluides, de manière telle que, dans la zone des arêtes de décollement (4), la vitesse d'écoulement dans l'état de fonctionnement correspondant, qui demande un ajout d'eau de condensation, dépasse une valeur de 3 m/s, en particulier de 6 m/s.

10. Echangeur de chaleur selon l'une quelconque des revendications précédentes, **caractérisé en ce que** l'échangeur de chaleur comprend au moins un ou deux générateurs de vibrations mécaniques.

11. Procédé de refroidissement d'air de suralimentation, où l'air de suralimentation traverse un échangeur de chaleur (1), **caractérisé en ce que** des gouttes d'eau de condensation s'accumulent au niveau d'au moins une surface hydrophobe de l'échangeur de chaleur (1), surface qui est baignée par le flux d'air de suralimentation, lesquelles gouttes d'eau de condensation sont décollées de la surface hydrophobe, par le flux d'air de suralimentation, et sont absorbées dans le flux d'air de suralimentation.

12. Procédé selon la revendication 11, **caractérisé en ce que** l'eau de condensation entraînée dans l'échangeur de chaleur continue à circuler dans l'air de suralimentation, sous forme de gouttelettes ou bien sous forme brumisée.

13. Procédé selon l'une quelconque des revendications précédentes, **caractérisé en ce que** l'eau de condensation s'accumule dans l'échangeur de chaleur, sous forme de gouttes sur des surfaces hydrophobes, où les gouttes (3) qui se forment présentent un angle de contact supérieur à 90°, de préférence supérieur à 120° et en particulier supérieur à 150°.

14. Procédé selon l'une quelconque des revendications précédentes, **caractérisé en ce que**, au moins dans un état de fonctionnement dans lequel de l'eau de condensation doit être fournie à l'air de suralimentation, l'air de suralimentation s'écoule, dans l'échangeur de chaleur (1), au moins dans la zone d'arêtes de décollement (4), à une vitesse d'écoulement supérieure à 3 m/s, en particulier supérieure à 6 m/s.

15. Procédé selon l'une quelconque des revendications précédentes, **caractérisé en ce que** des vibrations mécaniques sont provoquées dans l'échangeur de chaleur, en particulier par au moins un générateur de vibrations couplé à l'échangeur de chaleur.

16. Procédé selon la revendication 15, **caractérisé en ce que** les vibrations mécaniques sont orientées pratiquement de façon perpendiculaire à une surface de l'échangeur de chaleur, qui transmet de la chaleur.
